# EUROPÄISCHE PATENTANMELDUNG

(11) **EP 3 462 098 A1**
(43) Veröffentlichungstag der Anmeldung: **03.04.2019**
(21) Anmeldenummer: 18195413.2
(22) Anmeldetag: 19.09.2018
(51) Int. Cl.: F24F 1/06, F24F 1/20

(54) **AUSSENAGGREGAT EINER WÄRMEPUMPENANLAGE**

(30) Priorität: 29.09.2017 DE 102017217436
(71) Anmelder: Robert Bosch GmbH, 70442 Stuttgart (DE)
(72) Erfinder: Marko, Armin, 35043 Marburg (DE); Glueck, Christian, 35510 Butzbach (DE)

(57) **Zusammenfassung**

Das erfindungsgemäße Außenaggregat (1) einer Wärmepumpenanlage zum Austausch von Wärme mit einer Außenumgebung (2) eines Gebäudes zur Aufstellung in der Außenumgebung (2) umfasst eine Elektroenergiebereitstellungsvorrichtung (4) zum Bereitstellen von elektrischer Energie an mindestens einen externen elektrischen Verbraucher, insbesondere umfassend eine Ladevorrichtung (41) zum Aufladen von Akkumulatoren von Elektrofahrzeugen.

## Beschreibung

### Stand der Technik

Es ist bereits ein Außenaggregat einer Wärmepumpenanlage bekannt, die einem Austausch von Wärme mit einer Außenumgebung eines Gebäudes dient. Insbesondere kann dieses Außenaggregat in einer Außenumgebung eines Gebäudes aufgestellt sein und wärmeübertragend mit der Außenumgebung gekoppelt sein. Beispielsweise sind Wärmepumpenheizsysteme oder Wärmepumpenklimatisierungssysteme bekannt, die ein in einer Außenumgebung eines Gebäudes aufgestelltes Außenaggregat umfassen, über das sie Wärme mit der Außenumgebung austauschen.

### Offenbarung der Erfindung

Das erfindungsgemäße Außenaggregat einer Wärmepumpenanlage zum Austausch von Wärme mit einer Außenumgebung eines Gebäudes zur Aufstellung in der Außenumgebung umfasst eine Elektroenergiebereitstellungsvorrichtung zum Bereitstellen von elektrischer Energie an mindestens einen externen elektrischen Verbraucher, insbesondere umfassend eine Ladevorrichtung zum Aufladen von Akkumulatoren von Elektrofahrzeugen.

Unter einer Wärmepumpenanlage wird hier ein System mit einer Wärmepumpe zur Bereitstellung von Wärme und/oder Kälte verstanden, wie beispielsweise ein Heizungssystem, ein Warmwassersystem, eine Kälteanlage, eine Klimaanlage, eine kombinierte Anlage, mit dem/der einem Gebäude oder einem Gebäudebereich Wärme und/oder Kälte zugeführt und/oder Warmwasser und/oder Kaltwasser bereitet werden kann. Eine Wärmepumpe funktioniert beispielsweise als Kompressionswärmepumpe auf Basis eines Kältemittelkreislaufs (Kreislauf eines Kältemittels bzw. Kältemittelfluids) oder als Absorptionswärmepumpe oder als Adsorptionswärmepumpe. Eine Kompressionswärmepumpenanlage kann folgende Komponenten umfassen: einen oder mehrere Kältemittelwärmetauscher (beispielsweise Wärmetauscher ohne oder mit beabsichtigtem Phasenwechsel des Kältemittels, beispielsweise Kältemittelverdampfer, Kältemittelkondensator, gegebenenfalls kombinierte Verdampfer-Kondensatoren eines in seiner Kältemittelströmungsrichtung umkehrbaren Kältemittelkreislaufs), einen Kältemittelkompressor, ein Kältemittelexpansionselement, Ventile, Kältemittelleitungen zur fluidisch leitenden Verbindung der vorgenannten Komponenten, die vom Kältemittel in mindestens einer Richtung durchströmbar sind, ein Gebläse zur Förderung von Luft durch den Kältemittelwärmetauscher, verschiedene Sensoren für Druck und/oder Temperatur, Aktoren zum Verstellen der Komponenten, und/oder eine Regelungsvorrichtung zum Regeln des Außenaggregats, der Wärmepumpe und/oder der Anlage. Verdampfer, Kondensator und kombinierter Verdampfer-Kondensator sind beispielhafte Wärmetauscher mit beabsichtigtem Phasenwechsel des Kältemittels von flüssig zu gasförmig und/oder von gasförmig zu flüssig. Der Wärmetauscher dient einem Austausch von Wärme zwischen einem Kältemittelfluid und einer Außenumgebung, beispielsweise einer Luft in der Au-ßenumgebung. Ein kombinierter Verdampfer-Kondensator kann sowohl als Verdampfer als auch als Kondensator arbeiten, zum Beispiel in Abhängigkeit von einer Kältemittelströmungsrichtung und/oder von einer Betriebsweise (Kühlbetrieb, Heizbetrieb) der Wärmepumpenanlage. Die Wärmepumpenanlage kann ein Innenaggregat und/oder ein Außenaggregat umfassen. Der Begriff Wärme soll im Folgenden auch als Synonym für Kälte verwendet werden. - Unter einer Au-ßenumgebung eines Gebäudes wird hier ein räumlicher Bereich außerhalb einer Gebäudehülle verstanden, entweder im Freien unter freiem Himmel oder mit unmittelbarer Verbindung zum Freien wie beispielsweise unter einem Dach oder in einem Unterstand (Carport). - Unter "Aufstellung in der Außenumgebung" wird hier verstanden, dass das Außenaggregat außerhalb der Gebäudehülle, zum Beispiel freistehend und/oder an einer Fassade des Gebäudes und/oder in einem Unterstand, angeordnet ist. - Unter einem Außenaggregat wird hier eine in einer Außenumgebung aufgestellte oder aufstellbare Wärmepumpe oder ein in einer Außenumgebung aufgestellter oder aufstellbarer Teil einer Wärmepumpe verstanden. Handelt es sich bei dem Außenaggregat um eine in einer Außenumgebung aufgestellte oder aufstellbare Wärmepumpe, so umfasst das Außenaggregat alle wesentlichen Komponenten einer Wärmepumpe. Beispielsweise umfasst das Außenaggregat sämtliche Komponenten einer Wärmepumpe. Ein "Teil einer Wärmepumpe" umfasst einen Teil bzw. einige der zur Wärmepumpenanlage zählenden Komponenten. Beispielsweise umfasst das Außenaggregat als Teil einer Wärmepumpe mindestens einen Kältemittelwärmetauscher und ist als von den restlichen Wärmepumpenkomponenten räumlich getrennte Außeneinheit oder Außengerät in einer Außenumgebung eines Gebäudes aufgestellt, während der fluidisch leitend mit dem Außenaggregat verbundene Rest der Wärmepumpe als Innenaggregat, Inneneinheit oder Innengerät in einem Innenraum des Gebäudes aufgestellt ist. Beispielsweise kann das Außenaggregat als Außenmodul eines Wärmepumpen-Splitgerätes oder eines Klimaanlagen-Splitgerätes ausgebildet sein. Das Innenaggregat umfasst mindestens einen Kältemittelwärmetauscher und kann weitere Komponenten umfassen. Das Innenaggregat ist eine Vorrichtung zur Bereitstellung von Wärme und/oder Kälte und dient einer Übergabe von Wärme/Kälte in das Gebäude, den Gebäudebereich und/oder an das Wasser. - Unter einem externen elektrischen Verbraucher wird hier ein beliebiger Verbraucher elektrischer Energie verstanden, der außerhalb des Außenaggregats angeordnet oder anordenbar ist und nicht zum Außenaggregat oder zur Wärmepumpenanlage gehört. Beispielsweise ist dies ein Elektrofahrzeug, ein Elektroauto, ein Elektrofahrrad, ein elektrischer Energiespeicher, ein Elektromotor, und/oder ein sonstiger Elektroenergieverbraucher (zum Beispiel auf einem Marktstand, Garten, Hof). - Eine Elektroenergiebereitstellungsvorrichtung ist oder umfasst eine elektrische Ladevorrichtung, eine Stromtankstelle, eine Ladesäule, eine Ladestation, einen Ladepunkt, eine Ladeschnittstelle und/oder ein Ladekabel für elektrische Energiespeicher, alternativ oder ergänzend auch einen Elektrant und/oder eine Steckdose zum elektrisch leitenden Verbinden mit sonstigen Elektroenergieverbrauchern. - Dass das Außenaggregat eine Elektroenergiebereitstellungsvorrichtung umfasst, kann insbesondere bedeuten, dass das Außenaggregat mit einer Elektroenergiebereitstellungsvorrichtung integriert ausgebildet ist. Insbesondere ist das Außenaggregat der Wärmepumpe integriert mit einer Ladevorrichtung für Elektrofahrzeuge ausgebildet. Beispielsweise sind Außenaggregat und Ladevorrichtung als eine bauliche Einheit ausgebildet. - Ein elektrischer Energiespeicher bedeutet hier einen Akkumulator, worunter eine Batterie, eine wiederaufladbare Batterie, eine Traktionsbatterie, ein Stromspeicher, und/oder ein elektrischer Kondensator verstanden wird. Der elektrische Energiespeicher oder Akkumulator wird bei Nutzung der gespeicherten elektrischen Energie, beispielsweise zum Antrieb eines Elektrofahrzeugs, geleert und muss anschließend vor einer neuerlichen Nutzung wieder aufgeladen werden. Die elektrische Ladevorrichtung, die Ladesäule, die Stromtankstelle, der Ladepunkt, und/oder die Ladeschnittstelle dienen zum Aufladen des elektrischen Energiespeichers oder Akkumulators und können umfassen eine Anschlussvorrichtung zum Verbinden mit einem Elektroenergiebereitstellungssystem (beispielsweise eine öffentliche Stromversorgung oder ein Stromgenerator), einen Wechselrichter und/oder Gleichrichter und/oder Frequenzumrichter, eine Leistungselektronik und/oder eine Regelungsvorrichtung, sowie eine Anschlussvorrichtung, insbesondere ein Ladekabel, zum Verbinden mit dem elektrischen Energiespeicher oder Akkumulator.

Mit dem erfindungsgemäßen Außenaggregat ist eine kombinierte Vorrichtung zur Wärmeerzeugung und Wärmebereitstellung sowie zur Elektroenergiebereitstellung geschaffen, die einem Nutzer zwei Funktionen bietet, nämlich erstens die Erzeugung und Bereitstellung von Wärme und/oder Kälte durch Aufnahme von Wärme aus einer Außenumgebung und/oder Übertragung von Wärme in eine Außenumgebung nach dem Wärmepumpenprinzip sowie zweitens die Bereitstellung von elektrischer Energie an externe elektrische Verbraucher.

Eine vorteilhafte Ausgestaltung des Außenaggregats umfasst mindestens eine Anschlussvorrichtung zum Verbinden mit einem Innenaggregat der Wärmepumpenanlage mittels mindestens einer Wärmeträgerleitung, sowie umfasst mindestens eine Anschlussvorrichtung zum Verbinden mit einem Elektroenergieversorgungssystem mittels mindestens einem Elektrokabel. Die Wärmeträgerleitung kann insbesondere als Kältemittel führende Kältemittelleitung (zum Beispiel Vorlaufleitung und Rücklaufleitung) oder als Warmwasser und/oder Kaltwasser führende Wasserleitung (zum Beispiel Vorlaufleitung und Rücklaufleitung) ausgebildet sein. Das Elektrokabel ist eine stromführende Leitung und kann insbesondere ein zweiadriges oder mehradriges Kabel sein. Damit ist eine Verbindbarkeit des Außenaggregats mit weiteren Teilen der Wärmepumpe bzw. der Wärmepumpenanlage sowie mit einer Stromversorgung gegeben.

Bei einer weiteren vorteilhaften Ausgestaltung des Außenaggregats sind zur Wärmepumpenanlage zählende Komponenten des Außenaggregats und die Elektroenergiebereitstellungsvorrichtung im Wesentlichen in einem gemeinsamen Gehäuse angeordnet. Das Gehäuse kann eine aus Blech oder Kunststoff gebildete Hülle sein, die die zur Wärmepumpenanlage zählenden Komponenten des Außenaggregats und die Elektroenergiebereitstellungsvorrichtung vor Witterungseinflüssen und/oder Vandalismus schützt und eine optisch unaufdringliche und ästhetische Gestaltung des Außenaggregats gewährleistet. Beispielsweise kann es sich bei dem Gehäuse geometrisch um einen Würfel, einen Quader, eine Pyramide, einen Pyramidenstumpf, einen Zylinder, einen Kegel, einen Kegelstumpf, oder allgemeiner um ein Prisma mit quadratischer, rechteckiger, mehreckiger, runder, elliptischer oder sternförmiger Grundfläche handeln. Das Gehäuse kann insbesondere Öffnungen zum Eintritt und Austritt von Luft aufweisen, durch die Luft aus der Außenumgebung aufgrund von natürlicher Konvektion oder von einem Gebläse gefördert durch das Außenaggregat, den Kältemittelwärmetauscher, und/oder am Elektroenergieversorgungssystem vorbei, strömen kann. Das Gebläse kann ein in seiner Drehzahl regelbares und umkehrbares Gebläse sein.

Bei einer weiteren vorteilhaften Ausgestaltung des Außenaggregats sind die zur Wärmepumpenanlage zählenden Komponenten des Außenaggregats und die Elektroenergiebereitstellungsvorrichtung zu einer baulichen Einheit verbunden oder verbindbar. Unter einer baulichen Einheit wird hier eine räumlich kompakte, hinsichtlich mechanischer und/oder hydraulischer Aspekte integrierte und funktional einfache Gestaltung verstanden. Auch können Sicherheitsanforderungen zumindest teilweise gemeinsam abgedeckt werden.

Bei einer weiteren vorteilhaften Ausgestaltung des Außenaggregats sind die zur Wärmepumpenanlage zählenden Komponenten des Außenaggregats als ein Modul ausgebildet und/oder ist die Elektroenergiebereitstellungsvorrichtung als ein Modul ausgebildet, wobei das oder die Module in dem gemeinsamen Gehäuse angeordnet oder anordenbar und/oder aus dem gemeinsamen Gehäuse entnehmbar und/oder austauschbar ausgebildet sind. Damit ist das Außenaggregat funktional einfach und aufgeräumt gestaltet, leicht zu montieren und zu demontieren und somit auch leicht zu warten.

Bei einer weiteren vorteilhaften Ausgestaltung des Außenaggregats ist mindestens eine zur Wärmepumpenanlage zählende Komponente des Außenaggregats mittels mindestens einer Wärmeverbindungsleitung wärmeleitend mit der Elektroenergiebereitstellungsvorrichtung verbunden. Die hier genannte mindestens eine zur Wärmepumpenanlage zählende Komponente ist insbesondere ein Kältemittelwärmetauscher (beispielsweise ein Verdampfer, ein Kondensator, ein kombinierter Verdampfer-Kondensator), oder eine Kältemittelleitung. Die Wärmeverbindungsleitung kann insbesondere eine Wärmeträgerleitung und/oder Kältemittelleitung und/oder Luftleitung und/oder ein massiver Leiter sein, die/der Wärme aufgrund einer Wärmeträgerströmung, einer Kältemittelströmung, einer Luftströmung oder aufgrund von Wärmeleitung durch den massiven Leiter, insbesondere ein metallischer Leiter, transportiert. Dies erfolgt insbesondere zur Nutzung von Abwärme der Elektroenergiebereitstellungsvorrichtung in der Wärmepumpenanlage. Beispielsweise kann die Wärmeverbindungsleitung ein Abschnitt der Kältemittelleitung der Wärmepumpenanlage sein. Beispielsweise kann so eine im Betrieb sich erwärmende Komponente der Elektroenergiebereitstellungsvorrichtung gekühlt werden.

Bei einer weiteren vorteilhaften Ausgestaltung des Außenaggregats ist die Wärmeverbindungsleitung eine schaltbare Wärmeverbindungsleitung und umfasst insbesondere Luftklappen und/oder Ventile zur schaltbaren Nutzung von Abwärme der Elektroenergiebereitstellungsvorrichtung in der Wärmepumpenanlage. So kann die Wärmeverbindungsleitung und damit die Abwärmenutzung eingeschaltet und ausgeschaltet werden, je nachdem, ob die Abwärmenutzung gewünscht ist oder nicht.

Eine weitere vorteilhafte Ausgestaltung des Außenaggregats umfasst mindestens einen Elektroenergiezähler zum Messen elektrischer Energie, die zum Versorgen externer und/oder interner elektrischer Verbraucher verwendet wird. Damit kann - zum Beispiel im Hinblick auf eine differenzierte Stromkostenabrechnung - nach der Verwendung der Elektroenergie unterschieden werden.

Eine weitere vorteilhafte Ausgestaltung des Außenaggregats umfasst eine Identifikationsvorrichtung zur Identifikation eines Nutzers der Elektroenergiebereitstellungsvorrichtung und/oder eines mit der Elektroenergiebereitstellungsvorrichtung verbundenen und/oder verbindbaren externen elektrischen Verbrauchers, wobei die Identifikationsvorrichtung Mittel zur Freigabe einer Elektroenergiebereitstellung und/oder Mittel zur Abrechnung einer genutzten Elektroenergie umfasst. Unter einer Identifikationsvorrichtung kann hier beispielsweise ein Lesegerät oder ein Eingabegerät verstanden werden, das den Nutzer oder einen externen elektrischen Verbraucher identifiziert. Diese Identifikation kann zum Beispiel selbsttätig bei Herstellung einer Verbindung von Elektroenergiebereitstellungsvorrichtung und externem elektrischen Verbraucher, oder auf eine Interaktion des Nutzers hin erfolgen. Beispielsweise kann zur Identifikation eine Chipkarte oder ein Barcode eingelesen weden, oder ein Passwort manuell eingegeben werden. Anhand der Identifizierung kann eine Elektroenergiebereitstellung, insbesondere autorisiert, freigegeben werden, beispielsweise kann eine festgelegte Energiemenge freigegeben werden, oder die Freigabe erfolgt solange, bis der Nutzer oder der externe elektrische Verbraucher signalisieren, dass die Elektroenergiebereitstellung beendet werden soll. Die Mittel zur Abrechnung dienen einer Abrechung der Kosten, die mit der Elektroenergiebereitstellung verbunden sind, beispielswiese können die Mittel der Bargeldabrechnung oder bargeldlosen Abrechnung dienen, beispielsweise kann die Abrechnung per Bankeinzug von einem Bankkonto des Nutzers erfolgen. Die Mittel zur Abrechnung einer genutzten Elektroenergie können einen Elektroenergiezähler zum Messen elektrischer Energie umfassen oder mit einem Elektroenergiezähler verbunden sein. Mit dieser Ausgestaltung, insbesondere durch Identifikation, autorisierter Freigabe und nutzerzugeordneter beziehungsweise verbraucherzugeordneter Kostenabrechnung, wird die Nutzung der Elektroenergiebereitstellungsvorrichtung durch verschiedenen Nutzer erleichtert.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Es zeigen:
- Figur 1: ein vollintegriertes Außenaggregat,
- Figur 2: ein aus Modulen aufgebautes Außenaggregat.

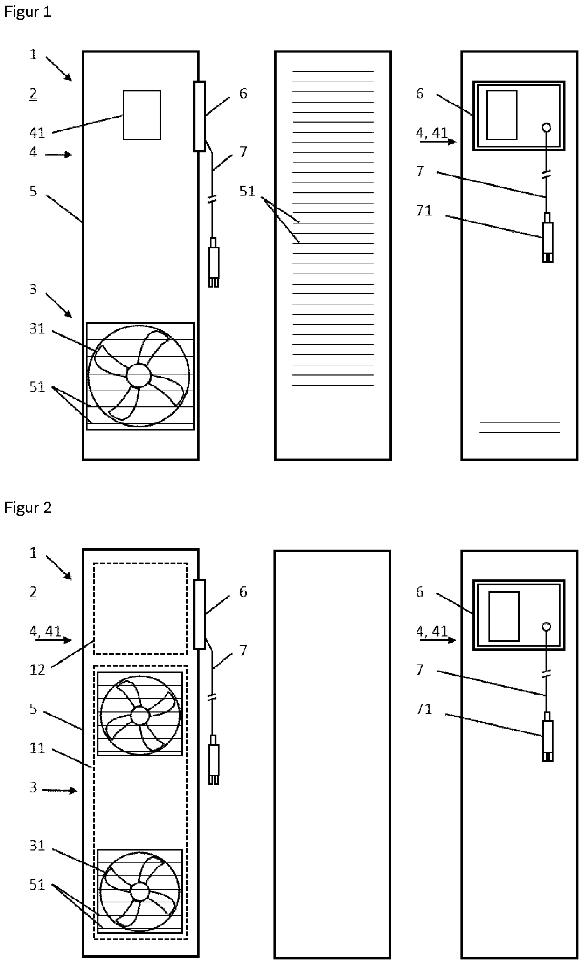

Figur 1 zeigt ein vollintegriert aufgebautes Außenaggregat 1 in (von links nach rechts) Seitenansicht, Rückansicht und Frontansicht. Das Außenaggregat 1 dient einer Wärmepumpenanlage zum Austausch von Wärme mit einer Außenumgebung 2 eines Gebäudes, beispielsweise mit der Außenluft der Außenumgebung 2, und ist zur Aufstellung in der Außenumgebung 2 ausgebildet. Neben speziell zur Wärmepumpenanlage zählenden Komponenten 3 umfasst das Außenaggregat eine Elektroenergiebereitstellungsvorrichtung 4 und dient damit zum Bereitstellen von elektrischer Energie an mindestens einen externen elektrischen Verbraucher. Hier umfasst das Außenaggregat 1 eine Ladevorrichtung 41 zum Aufladen von Akkumulatoren von Elektrofahrzeugen. Die zur Wärmepumpenanlage zählenden Komponenten 3 des Außenaggregats 1 und die Elektroenergiebereitstellungsvorrichtung 4 sind im Wesentlichen in einem gemeinsamen Gehäuse 5 angeordnet. Im oberen Bereich der Frontseite des Außenaggregats sind eine Bedien- und Anzeigevorrichtung 6 sowie ein Elektrokabel 7 (Ladekabel) einer Anschlussvorrichtung einer Elektroenergiebereitstellungsvorrichtung 4 angeordnet. Das Elektrokabel 7 dient zusammen mit einem Stecker 71 dem elektrisch leitenden Verbinden der Elektroenergiebereitstellungsvorrichtung 4 mit dem externen elektrischen Verbraucher, damit kann insbesondere ein Elektrofahrzeug und/oder ein Akkumulator eines Elektrofahrzeugs elektrisch aufgeladen werden. Die Elektroenergiebereitstellungsvorrichtung 4 kann weitere Komponenten umfassen wie Gleichrichter, Wechselrichter, Frequenzumrichter, eine Leistungselektronik, eine Regelungsvorrichtung. Ferner umfasst sind - als zur Wärmepumpenanlage zählende Komponenten 3 des Außenaggregats 1 - ein Kältemittelwärmetauscher (nicht dargestellt) und ein Luftgebläse 31 (hier sichtbar gezeichnet, tatsächlich innerhalb des Gehäuses 5), das Außenluft durch den Kältemittelwärmetauscher strömen lässt. Die Außenluft strömt durch Öffnungen 51 (hier als Schlitze dargestellt) im Gehäuse 5 in das Außenaggregat 1 hinein und wieder hinaus, auf dem Strömungsweg, der durch den Kältemittelwärmetauscher führt, gibt die Luft - je nach Betriebsart der Wärmepumpe (Heizbetrieb, Kühlbetrieb) - Wärme an den Kältemittelwärmetauscher ab oder nimmt die Luft Wärme von dem Kältemittelwärmetauscher auf, das Kältemittel im Kältemittelwärmetauscher verdampft oder kondensiert. Auf dem selben Strömungsweg kann die Luft auch an der Elektroenergiebereitstellungsvorrichtung 4 vorbeiströmen und diese beispielsweise kühlen. Die von der Luft so aufgenommene Wärme kann im Heizbetrieb ebenfalls dem Kältemittelwärmetauscher zugeführt und vom Kältemittel aufgenommen werden. Dies erhöht einen Wirkungsgrad der Wärmepumpenanlage. Damit kann ein Gebäude oder Gebäudebereich erwärmt werden. Ergänzend oder alternativ kann über den Kältemittelwärmetauscher auch Wärme an die Außenumgebung 2, beispielsweis an die Außenluft, abgegeben werden und ein Gebäude oder ein Gebäudebereich gekühlt werden. Nicht dargestellt sind Anschlussvorrichtungen zum Verbinden des Außenaggregats 1 mit einem Innenaggregat der Wärmepumpenanlage mittels mindestens einer Wärmeträgerleitung sowie zum Verbinden mit einem Elektroenergieversorgungssystem mittels mindestens einem Elektrokabel. Beispielsweise in der Bedien- und Anzeigevorrichtung 6 integriert sein können ein oder mehrere Elektroenergiezähler (nicht dargestellt) zum Messen elektrischer Energie, und/oder eine Identifikationsvorrichtung (nicht dargestellt) zur Identifikation eines Nutzers und/oder eines externen elektrischen Verbrauchers, zur autorisierten Freigabe und nutzerzugeordneten beziehungsweise verbraucherzugeordneten Kostenabrechnung. Das dargestellte Außenaggregat 1 fungiert somit als baueinheitliche Außeneinheit einer Wärmepumpenanlage zum Austausch von Wärme mit einer Außenumgebung 2 eines Gebäudes sowie als Elektroenergiebereitstellungsvorrichtung 4 zum Bereitstellen von elektrischer Energie an mindestens einen externen elektrischen Verbraucher, beispielsweise als Ladevorrichtung zum Aufladen von Akkumulatoren von Elektrofahrzeugen.

Figur 2 zeigt ein aus Modulen 11, 12 aufgebautes Außenaggregat 1 in (von links nach rechts) Seitenansicht, Rückansicht und Frontansicht. Das hier dargestellte Außenaggregat 1 unterscheidet sich von dem in Figur 1 dargestellten Außenaggregat 1 im Wesentlichen dadurch, dass innerhalb eines gemeinsamen Gehäuses 5 zwei Module 11, 12 angeordnet sind, von denen ein erstes Modul 11 die zur Wärmepumpenanlage zählenden Komponenten 3 des Außenaggregats 1 umfasst, und ein zweites Modul 12 die Elektroenergiebereitstellungsvorrichtung 4 umfasst. Die Module 11, 12 sind einzeln oder gemeinsam aus dem gemeinsamen Gehäuse 5 entnehmbar und/oder austauschbar ausgebildet, dies bietet große Vorteile insbesondere bei einer Wartung oder Reparatur des Außenaggregats 1. Unabhängig von dem Modulaufbau des Außenaggregats 1 kann mindestens eine Komponente eines Moduls 11, 12 Aufgaben beider Module 11, 12 übernehmen, beispielsweise kann die Bedien- und Anzeigevorrichtung 6 räumlich dem Energiebereitstellungsmodul 12 zugeordnet sein, aber Bedien- und Anzeigefunktionen sowohl des Wärmepumpenmoduls 11 als auch des Energiebereitstellungsmoduls 12 übernehmen.

## Patentansprüche

1. Außenaggregat (1) einer Wärmepumpenanlage zum Austausch von Wärme mit einer Außenumgebung (2) eines Gebäudes zur Aufstellung in der Außenumgebung (2),
umfassend eine Elektroenergiebereitstellungsvorrichtung (4) zum Bereitstellen von elektrischer Energie an mindestens einen externen elektrischen Verbraucher, insbesondere umfassend eine Ladevorrichtung (41) zum Aufladen von Akkumulatoren von Elektrofahrzeugen.

2. Außenaggregat (1) nach Anspruch 1,
umfassend mindestens eine Anschlussvorrichtung zum Verbinden mit einem Innenaggregat der Wärmepumpenanlage mittels mindestens einer Wärmeträgerleitung, sowie umfassend mindestens eine Anschlussvorrichtung zum Verbinden mit einem Elektroenergieversorgungssystem mittels mindestens einem Elektrokabel.

3. Außenaggregat (1) nach Anspruch 1 oder 2,
wobei zur Wärmepumpenanlage zählende Komponenten (3) des Außenaggregats (1) und die Elektroenergiebereitstellungsvorrichtung (4) im Wesentlichen in einem gemeinsamen Gehäuse (5) angeordnet sind.

4. Außenaggregat (1) nach einem der vorhergehenden Ansprüche,
wobei die zur Wärmepumpenanlage zählenden Komponenten (3) des Außenaggregats (1) und die Elektroenergiebereitstellungsvorrichtung (4) zu einer baulichen Einheit verbunden oder verbindbar sind.

5. Außenaggregat (1) nach einem der vorhergehenden Ansprüche,
wobei die zur Wärmepumpenanlage zählenden Komponenten (3) des Außenaggregats (1) und/oder die Elektroenergiebereitstellungsvorrichtung (4) als Module (11, 12) ausgebildet sind, wobei das oder die Module (11, 12) in dem gemeinsamen Gehäuse (5) angeordnet oder anordenbar und/oder aus dem gemeinsamen Gehäuse (5) entnehmbar und/oder austauschbar ausgebildet sind.

6. Außenaggregat (1) nach einem der vorhergehenden Ansprüche,
wobei mindestens eine zur Wärmepumpenanlage zählende Komponente (3) des Außenaggregats (1) mittels mindestens einer Wärmeverbindungsleitung wärmeleitend mit der Elektroenergiebereitstellungsvorrichtung (4) verbunden ist.

7. Außenaggregat (1) nach Anspruch 6,
wobei die Wärmeverbindungsleitung eine schaltbare Wärmeverbindungsleitung ist, insbesondere umfassend Luftklappen und/oder Ventile, insbesondere zur schaltbaren Nutzung von Abwärme der Elektroenergiebereitstellungsvorrichtung (4) in der Wärmepumpenanlage.

8. Außenaggregat (1) nach einem der vorhergehenden Ansprüche,
umfassend mindestens einen Elektroenergiezähler zum Messen elektrischer Energie, die zum Versorgen externer und/oder interner elektrischer Verbraucher verwendet wird.

9. Außenaggregat (1) nach einem der vorhergehenden Ansprüche,
umfassend eine Identifikationsvorrichtung zur Identifikation eines Nutzers der Elektroenergiebereitstellungsvorrichtung (4) und/oder eines mit der Elektroenergiebereitstellungsvorrichtung (4) verbundenen und/oder verbindbaren externen elektrischen Verbrauchers, wobei die Identifikationsvorrichtung Mittel zur Freigabe einer Elektroenergiebereitstellung und/oder Mittel zur Abrechnung einer genutzten Elektroenergie umfasst.
